(19) Europäisches Patentamt
European Patent Office
Office européen des brevets

(11) **EP 4 369 367 A1**

(12) **EUROPEAN PATENT APPLICATION**

(43) Date of publication:
**15.05.2024   Bulletin 2024/20**

(21) Application number: **22465566.2**

(22) Date of filing: **10.11.2022**

(51) International Patent Classification (IPC):
*H01G 4/06* (2006.01)      *H01G 4/12* (2006.01)
*H01G 4/20* (2006.01)      *H01G 4/30* (2006.01)

(52) Cooperative Patent Classification (CPC):
**H01G 4/1272; H01G 4/06; H01G 4/20; H01G 4/306**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Institutul National de Cercetare-Dezvoltare Pentru Fizica Materialelor-INCDFM Bucuresti**
**Magurele, Jud. Ilfov (RO)**

(72) Inventors:
- **PINTILIE, Lucian**
  **Magurele (RO)**
- **BONI, Georgia Andra**
  **Bucuresti (RO)**

- **CHIRILA, Cristina**
  **Bucuresti (RO)**
- **HRIB, Luminita**
  **Bucuresti (RO)**
- **PINTILIE, Ioana**
  **Magurele (RO)**

(74) Representative: **Enescu, Miruna**
**Rominvent S.A.**
**35, Ermil Pangratti Str.**
**1st Floor**
**Sector 1**
**011882 Bucharest (RO)**

Remarks:
Amended claims in accordance with Rule 137(2) EPC.

(54) **CAPACITIVE DEVICE COMPRISING A FERROELECTRIC P-N HOMOJUNCTION WITH NEGATIVE CAPACITANCE, METHOD OF MAKING THE SAME AND USE**

(57)     The present invention refers to a capacitive device comprising two electrodes (2, 4) separated by a dielectric medium (5), wherein said dielectric medium (5) consists of one or more pairs of ferroelectric (FE) layers (30,32), each pair having a first, n-type FE layer (30) made of an n-doped FE material and a second, p-type FE layer made of a p-doped FE material, wherein said first and second FE layers (30 and 32) form a FE p-n homojunction and have substantially equal doping concentrations. Furthermore, the present invention refers to a method for manufacturing such a capacitive device. Also, the invention refers to the use of a ferroelectric bi-layer forming a p-n homojunction wherein the two layers have substantially equal p-type and n-type doping concentrations in a capacitive device.

Fig. 1

EP 4 369 367 A1

## Description

FIELD OF THE INVENTION

The present invention relates to capacitive devices comprising at least one bi-layer ferroelectric (FE) structure forming ferroelectric p-n homojunctions, to methods for manufacturing the capacitive devices and the use of such FE by-layers in capacitive devices.

PRIOR ART OF THE INVENTION

Capacitive devices are electronic devices able to store electric charge. A capacitive device usually includes two or more electrodes, usually in the form of conductive layers, separated by isolator materials, such as dielectrics. The capacitance C of the capacitive device is a measure of its ability to store electrical charges, expressed as the ratio between the amount of electric charge stored on its conductive layers and their difference of electric potential (voltage). A recently implemented method to increase the capacitance of capacitive devices is the use of the negative capacitance (NC) effect shown by ferroelectric materials. Ferroelectric (FE) materials are dielectrics having the ability to spontaneously polarize, whitout the presence of an electric field, for example further to lowering the temperature. This ability has led to their use for inducing a NC effect, which can be either a transitory, unstable NC effect manifesting itself only during the switching of the ferroelectric polarization, or a steady state (stabilized) NC effect manifesting itself in heterostructures in which the NC of a ferroelectric layer is compensated by a corresponding rise in the positive capacitance of the surrounding region(s), leading to an enhancement of the equivalent capacitance of the heterostructure. The simplest known heterostructure dispaying a NC effectis is a bi-layer structure combining a ferroelectric layer with a layer of another isolating material, for example a non-ferroelectric dielectric (referred to in the literature simply as a dielectric).

In accordance with the electrostatic theory, the capacitance C of a multy-layer structure is calculated by applying the model of serial connection of the component capacitors, each one corresponding to a material layer in the multylayer structure (J Mater Sci (2016) 51:499-505). Therefore, the equivalent capacitance of the heterostructure is calculated with the clasic formula:

$$1/C_{eq} = 1/C_1 + 1/C_2 + ... + 1/C_n$$

where $C_{eq}$ represents the equivalent capacitance, and 1, 2, 3 ...n represent the numbers of the layers in the heterostructure. The equivalent capacitance $C_{eq}$ should be smaller than each of the capacitances of the component layers $C_1$, $C_2$, ...$C_n$. If this prediction of the serial connection model is not fulfilled and $C_{eq}$ is higher than the capacitance of a component layer, it is considered that the structure is in a steady state negative capacitance.

Although ferroelectric (FE) materials are basically dielectric materials with the ability to spontaneously polarize, in accordance with the usual practice in the field, throughout the present document, the wordings: "dielectric material", "dielectric", "DE" will be used to mean dielectric materials that are not ferroelectric.

In the scientific article "Negative capacitance effects in ferroelectric heterostructures: A theoretical perspective", published in the Journal of Applied Physics 129, 080901 (2021) (Atanu K. Saha and Sumeet K. Gupta), the authors provide an overview of the current theoretical understanding of the possible origins of NC effects in ferroelectrics. They show that, to stabilize a negative capacitor, a positive capacitor is required to be connected in series so that the equivalent capacitance of the system remains positive, or, equivalently, a heterogeneous capacitive system has to be constructed comprising a ferroelectric FE layer, and a linear dielectric (DE) layer (which is, as mentioned above, made of a dielectric DE that is not ferroelectric), sandwiched between two metal electrodes. Such a heterogeneous system is also called metal-ferroelectric-insulator-metal (MFIM), wherein the insulator (I) is the dielectric DE. The authors study the capacitance using as a model this MFIM model also referred to as a ferroelectric (FE) - dielectric (DE) stack, which is at present the basic model for the electronic devices using the negative capacitance effect. The authors explain that, in the MFIM stack, the transfer of the energy from the FE layer to the DE layer leads to the enhanced energy of the DE beyond the energy supplied from the source, hence, it leads to increased equivalent capacitance of the heterogeneous device. However, the authors explain that this model has some drawbacks, most importantly with respect to the stability of the ferroelectric negative capacitance effect, because the polarization can spatially vary both along with the thickness of the layer and in-plane directions, and also because of the formation of a multi-domain state in the FE layer.

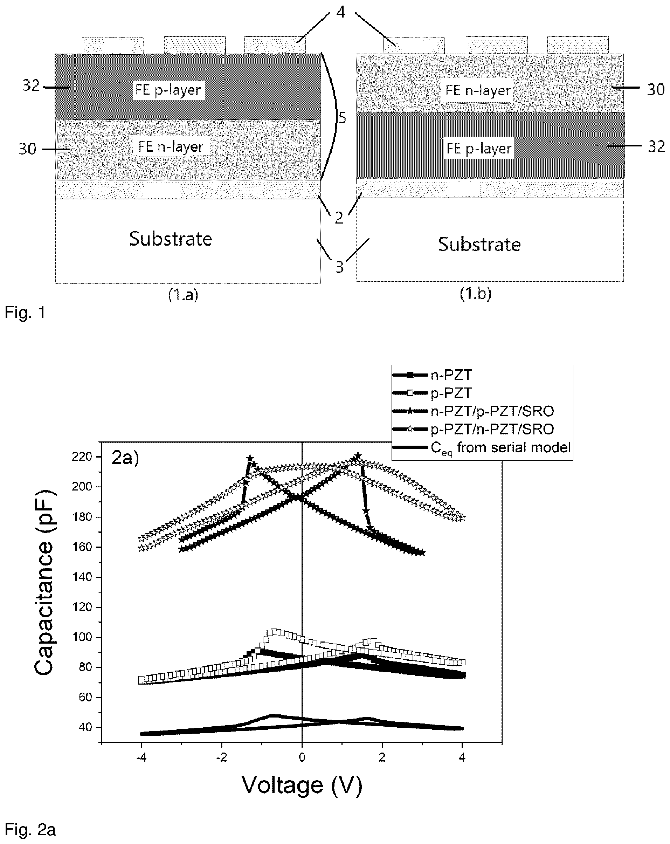

These electronic systems with FE-DE heterostructures using the negative capacitance effect have been constructed for devices where voltage is applied in pulses, and the negative capacitance is a transitory effect, with a magnitude which is dependent on the amplitude of the applied tension or the magnitude of the applied frequency. Moreover, as mentioned in the article "Experimental evidence of ferroelectric negative capacitance in nanoscale heterostructures, Asif Islam Khan et. Al, Appl. Phys. Lett. 99, 113501 (2011), the NC effect appears only at high temperatures of over 300°C, as shown in figure 2a of said article. Alternatively, for heterostructures at room temperature, as mentioned in article "Room temperature negative capacitance in a ferroelectric-dielectric superlatice heterostructure", Weiwei Gao et. Al., Nano Lett. 2014, a stabilized NC effect is present only at high frequencies. Also, the increase of the capacitance induced by the NC effect of the DE-FE bi-layers of these documents is not significant, as compared with the capacitance of their DE layer.

Thus, there is a need to stabilize the negative capacitance effect of electronic devices at room temperature and for lower frequencies, leading to increased capacitance of capacitive devices at the same thickness and electrode area.

The technical problem solved by the present invention consists of designing new capacitive devices with improved stability of the negative capacitance effect and with increased equivalent capacitance.

Capacitive device

In a first aspect, the present invention discloses capacitive devices comprising two electrodes, separated by a dielectric medium, wherein said dielectric medium consists of one or more pairs of ferroelectric (FE) layers, each pair having:

- a first, n-type FE layer made of an n-doped FE material and
- a second, p-type FE layer made of a p-doped FE material,

wherein said first and second FE layers form a FE p-n homojunction and have substantially equal doping concentrations.

When more than one pair of FE layers are present, the consecutive FE layers have different, p-type or n-type, dopings, and have substantially the same permittivity and doping concentrations. Therefore, the doping of consecutive layers alternates, for example for three pairs of FE layers the dopings would be p-n-p-n-p-n or n-p-n-p-n-p. In some embodiments, all the FE layer pairs can be made from the same FE material, have the same thickness and doping concentrations.

By capacitive devices it is meant any devices able to store electric charge, such as capacitors.

The electrodes of the capacitive device are preferably in the form of conductive layers.

The dielectric medium of the present invention is a dielectric element made of one or more FE bi-layers (or pairs of FE layers), and does not comprise any dielectric material that is not ferroelectric.

Said at least one pair of FE layers form a ferroelectric p-n homojunction.

The wording "FE *homojunction"* means that the first and second FE layers are made of ferroelectric materials having the same electrical permittivity (the same band gap). In some embodiments, before doping, the first and second FE layers of the homojunction are made of the same FE material and have the same thickness. In preferred embodiments, said first and second FE layers are made of materials with high polarization, such as $Pb(Zr,Ti)O_3$ (PZT), $BaTiO_3$ or $BiFeO_3$.

The wording "p-n homojunction" refers to the fact that one of the layers is n-type, meaning it is n-doped, or has n-type doping (electrons are the majority carriers), and the other layer is p-type, meaning it is p-doped, or it has p-type doping (holes are the majority carriers). The doping of the ferroelectric layers may be made by the usual methods known in the art.

The n-type doping concentration of the first, n-type FE layer is substantially equal with the p-type doping concentration of the second, p-type FE layer. In preferred embodiments, the doping concentration of the n-type layer is of about 0.5 to 3%, preferably about 1%, and the doping concentration of the p-type layer is also of about 0.5 to 3%, preferably about 1%. So, the expected doping in the FE layers is from $0.8 \times 10^{20}$ cm$^{-3}$ to $5 \times 10^{20}$ cm$^{-3}$, preferably about $1 \times 10^{20}$ cm$^{-3}$, at room temperature. In a preferred embodiment, the FE layers are made of PZT with a Zr/Ti ratio of 20/80, the n-doping is made by replacing Zr or Ti atoms with Nb (giving one electron, thus acting as a donor), and the p-doping is made by replacing the Zr or Ti atoms with Fe (receiving one electron, thus acting as an acceptor). In a preferred embodiment, the n-type PZT layer is doped with about 1% Nb, and the p-type PZT layer is doped with about 1% Fe, so the expected doping in the PZT layers is of $10^{20}$ cm$^{-3}$ at most, at room temperature.

Thus, in a capacitive device according to the present invention, the conductive layers are separated only by pairs of FE p-n homojunctions, without any dielectric material that is not ferroelectric. In the structure of each of the two FE-layers forming a FE p-n homojunction there will be charge carriers of only one type, electrons in the n-type and holes in the p-type layer. These charge carriers will travel to compensate the polarization charge at the homojunction electrode interfaces. This has stabilizing effect in the material, as compared with FE-DE interfaces where the DE material does not have any charges able to compensate the charges in the FE layer, which in turn leads to the creation of internal fields that can destabilize the polarity in the FE layer and give rise to transitory phenomena of variable magnitude, dependent on the magnitude of the applied voltage and frequency. The FE p-n homojunction of the present invention, on the other hand, has equivalent concentrations of both kinds (p-type and n-type) of charge carriers, which are able to react to any magnitudes of voltage and/or frequency applied to the device, and can contribute in real time to the compensation of the polarization charges, thus reducing the transitory effects and having a stabilizing influence. Moreover, the presence of n-type and p-type charges spatially distributed in the two layers of the FE p-n homojunction leads to an increase of the equivalent (total) capacitance, while also contributing to the stabilization of the Negative Capacitance effect.

The capacitive device of the invention has the following advantages:

- the stabilized, steady-state negative capacitance effect is present at room temperature, as opposed to the FE-DE heterostructures mentioned in the state of the art, where high temperature is used as the effective tuning parameter for the FE negative capacitance and the degree of capacitance enhancement in the FE-DE heterostructures;

- the capacitive device of the present invention has an increase of the capacitance due to the negative capacitance effect that is significantly larger than the increase shown by a dielectric-ferroelectric bi-layer or superlattice. For example, as shown in Figure 2a of the present disclosure the capacitance of the bi-layer structures increases about two times compared to the capacitances of the component layers measured separately (at the same total thickness and same area of the electrodes). In said article, *"Room temperature negative capacitance in a ferroelectric-dielectric superlatice heterostructure", Weiwei Gao et. Al., Nano Lett. 2014,* the capacitance of a $Ba_{0.8}Sr_{0.2}TiO_3$ / $LaAlO_3$ ferroelectric-dielectric structure increases at most 1.2 times compared to the dielectric layer, as shown in figure 3a of the article. In C-V characteristics measured at the same frequency of 100 kHZ, the capacitance increase in the capacitive device of the present invention is of about 100% as compared to about 20% as shown in figure 3f of the mentioned article.

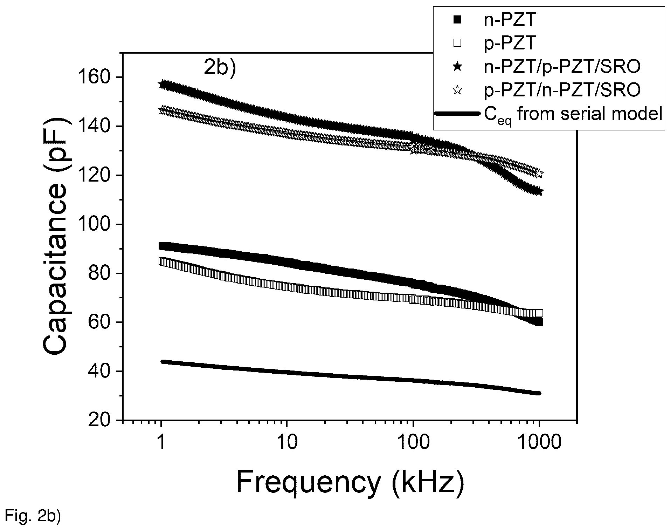

- the stabilized, steady-state negative capacitance effect is also present at significantly lower frequencies compared to the state of the art. For example, an increase of about 67% of the equivalent capacitance has been showed in the capacitive device of the present invention at an increase of frequency as low as 1 kHz, as shown in Figure 2b of the present disclosure. By comparison, in the document mentioned above, article *"Room temperature negative capacitance in a ferroelectric-dielectric superlatice heterostructure", Weiwei Gao et. Al., Nano Lett. 2014,* for a capacitance increase of about 20%, a frequency increase of 10 kHz is needed, as estimated from figure 3b of said article.

## Use of a FE p-n homoiunction in capacitive devices

In another aspect of the present invention, there is disclosed the use of a ferroelectric bi-layer forming a p-n homojunction with substantially equal p-type and n-type dopings in a capacitive device.

As mentioned before, the use of such a ferroelectric bi-layer in a capacitive device induces a stabilized NC effect which leads to increased capacitance of the device.

## Method for manufacturing capacitive device with FE p-n homoiunction(s)

In another aspect, the invention discloses a method for manufacturing a capacitive device with increased NC effect, comprising the steps:

i) depositing, by epitaxial deposition, a first conductive layer on a substrate,
ii) depositing, by epitaxial deposition, one of a first, n-doped FE layer or a second, p-doped FE layer on the conductive layer of step i),
iii) depositing, by epitaxial deposition, the other of a first, n-doped FE layer or a second, p-doped FE layer on the layer deposited in step ii),
iv) depositing, by epitaxial deposition, a second conductive layer on the layer deposited in step iii).

In a further aspect of the invention, it is disclosed a capacitive device produced by the above method.

In some embodiments, steps ii) and iii) are repeated, such that at least a further pair of n-doped and p-doped layers are deposited on the layer deposited in step iii), so that any two consecutive FE layers have different, n-type or p-type dopings.

The substrate mentioned at step i) can be any commercially available substrate suitable for capacitive devices. In preferred embodiments, the substrate has a pervoskite structure, preferably in the form of a single-crystal layer with (0,0,1) orientation, more preferably made of $SrTiO_3$ (STO).

The layers are deposited by epitaxial deposition, which has the advantage that the structural defects are reduced to the minimum, so the doping effect is maximized and as a consequence the negative capacitance effect is also maximized. In preferred embodiments, the FE layers and the conductive layers are deposited by pulsed laser deposition (PLD). Also in preferred embodiments, the n-doped and p-doped FE layers are deposited with the same thickness.

Further to the described method, depending of the order of deposition of the p-type and n-type layers, two configurations of homojunctions can be obtained:

- when the n-type layer is deposited in step ii), the capacitive device obtained has the structure: substrate - conductive layer - (n-type FE layer - p-type FE layer)$_n$ - conductive layer, wherein n = the number of FE bi-layers, and
- when the p-type layer is deposited in step ii), the capacitive device obtained has the structure: substrate - conductive layer - (p-type FE layer - n-type FE layer)$_n$ - conductive layer, wherein n = the number of FE bi-layers.

As seen in figure 2a), there are some differences between the shapes of the C-V characteristics of these two configurations, because the reversing of the polarization differs slightly depending of the order of the layers, but the magnitude of the NC effects are similar for both configurations.

Examples

There are further presented some examples of the invention, in connection also with the figures, which represent:

Fig. 1 shows the structures of capacitive devices according to some embodiments of the present invention, in two configurations, (1.a) and (1.b).

Fig. 2a) shows comparative Capacitance-Voltage characteristics recorded for different examples

Fig. 2b) shows comparative Capacitance-Frequency characteristics recorded for different examples.

A capacitive device according to one embodiment of the present device has been manufactured as follows:

On a single crystal $SrTiO_3$ (STO) substrate (3) with (0,0,1) orientation was deposited by pulsed laser deposition (PLD) a SrRuO3(SRO) layer of 20 nm having the role of an electrode (2).

A bi-layer ferroelectric structure (5) was deposited by PLD on the SRO layer. The ferroelectric material used was Pb(Zr,Ti)O3 (PZT), with Zr/Ti ratio of 20/80. The n-type doping was obtained by replacing Zr or Ti atoms with Nb (giving one electron, thus acting as donor), while the p-type doping was obtained by replacing the same Zr or Ti atoms with Fe (receiving an electro, thus acting as acceptor). Therefore, the expected doping in the deposited PZT layers was of $10^{20} cm^{-3}$ at most.

The deposition of the bottom SRO electrode (2) and of the n and p type doped PZT layers (30, 32) was performed using an excimer laser (KrF) of 248 nm wavelength, 700 mJ maximum energy, and maximum 10 Hz pulse frequency. The following parameters were used for depositing the layers: SRO bottom electrode-substrate temperature of 700 °C, 0.133 mbar oxygen atmosphere, laser fluence of 2 J/cm2 and a repetition rate of 5 Hz; PZT layers, n and p type, were deposited at 575 °C, 0.2 mbar oxygen atmosphere, with a laser fluence of 2 J/cm2 and a repetition rate of 5 Hz. After deposition, the PZT layers were annealed at 575 °C in oxygen atmosphere at 1 bar, for 1 h, to compensate the oxygen vacancies.

Two types of homojunctions were obtained by successive deposition of the n-type and p-type doped PZT: in the first configuration, shown in Figure (1.a), the n-type FE layer (30) was deposited first, then the p-type FE layer (32). The resulting (1.a) configuration was: PZT-p/PZT-n/SRO/STO. In the second configuration, according to Figure (1.b), the order was reversed, the first layer deposited on the electrode (2) placed on the substrate (3) was the p-type FE layer (32) and thereon was deposited the n-type FE layer (30). The resulting (1.b) configuration was PZT-n/PZT-p/SRO/STO. The thickness of the PZT doped layers (30, 32) was the same, of about 100 nm.

The final layer of the capacitive device was obtained by depositing a top SRO contact, which is the second electrode (4) of 100x100 $\mu$m2. The deposition was performed also by PLD, at room temperature, the rest of the parameters being the same as for the first electrode (2), namely the bottom SRO contact. The structures as obtained are presented in Figure 1, configurations (1.a) and (1.b).

Capacitance-voltage (C-V) measurements were performed at room temperature by placing the sample in a special measurement set-up with micro-manipulated arms. The top and bottom SRO electrodes (2, 4) were contacted with CuBe needles and the capacitance was measured at different voltages using a LRC meter from Hioki, with incorporated voltage source. Example of recorded C-V characteristics are presented in Figure 2a, both for the bi-layer structures of configurations (1.a) and (1.b), and for separate p-type and n-type PZT layers grown by PLD in the same conditions, on similar STO substrates, with similar SRO electrodes and thickness as the bi-layer structures.

One can see that for the entire voltage range the capacitance of the bi-layer structures is larger than that of the component p-type and n-type layers measured separately. This is the fingerprint of the negative capacitance effect. The capacitance values resulted from the model of serially connected capacitors ($C_{eq}$ from serial model) is also presented in Figure 2a for completeness.

It is thus demonstrated that the p-n ferroelectric homojunction shows negative capacitance effect, the capacitance of the bi-layer structures being much larger than the capacitances of the component layers, not only in the voltage range where the polarization switching takes place (corresponding the peaks in the C-V characteristics) but on the entire voltage range used for measurements, thus for voltages for which the ferroelectric polarization is saturated. This is a steady state negative capacitance effect.

Besides C-V measurements, capacitance-frequency (C-f) measurements were also performed at room temperature and zero applied voltage on the samples, using the same equipment as for C-V measurements. Example of recorded C-f characteristics are presented in Figure 2b, both for bi-layer structures of configurations (1.a) and (1.b), and also for separate p-type and n-type PZT layers grown by PLD in the same conditions, on similar STO substrates, with similar SRO electrodes and thickness as the bi-layer structures.

One can see that for the entire frequency range the capacitance of the bi-layer structures is larger than that of the component p-type and n-type layers measured separately. This is the fingerprint of the negative capacitance effect. The capacitance values resulted from the model of serially connected capacitors ($C_{eq}$ from serial model) is also presented in Figure 2b for completeness.

It is thus demonstrated that the p-n ferroelectric homojunction shows negative capacitance effect, the capacitance of the bi-layer structures being much larger than the capacitances of the component layers for a large frequency range.

## Claims

1. Capacitive device comprising two electrodes (2, 4) separated by a dielectric medium (5), **characterized in that** said dielectric medium (5) consists of one or more pairs of ferroelectric (FE) layers (30,32), each pair having:

   - a first, n-type FE layer (30) made of an n-doped FE material and
   - a second, p-type FE layer made of a p-doped FE material,

   wherein said first and second FE layers (30 and 32) form a FE p-n homojunction and have substantially equal doping concentrations.

2. Capacitive device according to claim 1, wherein consecutive FE layers are of different types, namely a p-type layer after an n-type layer or an n-type layer after a p-type layer, and have substantially the same permittivities and doping concentrations.

3. Capacitive device according to any of the preceding claims, wherein said first and second FE layers, before doping, are made of the same FE material, preferably a FE material with high polarization, preferably Pb(Zr,Ti)O$_3$ (PZT).

4. Capacitive device according to any of the preceding claims, wherein the doping concentrations of said first and second FE layers (30, 32) are from $0.8 \cdot 10^{20}$ cm$^{-3}$ to $5 \cdot 10^{20}$ cm$^{-3}$, preferably of about $1 \cdot 10^{20}$ cm$^{-3}$, at room temperature.

5. Capacitive device according to any of the preceding claims, wherein said first and second FE layers (30, 32) are made of PZT, and said n-type FE layer (30) is doped with about 1% Nb and said p-type FE layer (32) is doped with about 1% Fe.

6. Method for manufacturing a capacitive device according to any preceding claim, comprising the steps:

   i) depositing, by epitaxial deposition, a first electrod (2) on a substrate (3),
   ii) depositing, by epitaxial deposition, one of the first, n-doped FE layer (30) or second, p-doped FE layer (32) on the conductive layer (2),
   iii) depositing, by epitaxial deposition, the other of the first, n-doped FE layer (30) or second, p-doped FE layer (32) on the layer deposited in step ii),
   iv) depositing, by epitaxial deposition, a second electrod (4) on the layer deposited in step iii).

7. Method according to claim 6, wherein, after step iii, at least a further pair of n-doped and p-doped layers (30, 32) are deposited on the layer deposited in step iii), such that any two consecutive FE layers have different, n-type or p-type dopings.

8. Method according to any of claims 6 to 7, wherein the substrate mentioned at step i) is in the form of a single-crystal layer having a pervoskite structure, preferably made of SrTiO$_3$ (STO) with (0,0,1) orientation.

9. Method according to any of claims 6 to 8, wherein the epitaxial deposition of the layers is made by pulsed laser deposition (PLD).

10. Use of a ferroelectric bi-layer forming a p-n homojunction wherein the two layers have substantially equal p-type and n-type doping concentrations in a capacitive device.

**Amended claims in accordance with Rule 137(2) EPC.**

1. Capacitive device comprising two electrodes (2, 4) separated by a ferroelectric (FE) medium (5) consisting of one or more pairs of ferroelectric (FE) layers (30,32), **characterized in that** each of said one or more pairs of ferroelectric (FE) layers (30, 32) has:

   - a first, n-type FE layer (30) made of an n-doped FE material and
   - a second, p-type FE layer (32) made of a p-doped FE material,

   wherein said first and second FE layers (30 and 32) form a FE p-n homojunction and have substantially equal doping concentrations.

2. Capacitive device according to claim 1, wherein consecutive FE layers are of different types, namely a p-type layer after an n-type layer or an n-type layer after a p-type layer, and have substantially the same permittivities and doping concentrations.

3. Capacitive device according to any of the preceding claims, wherein said first and second FE layers, before doping, are made of the same FE material, preferably a FE material with high polarization, preferably Pb(Zr,Ti)O$_3$ (PZT).

4. Capacitive device according to any of the preceding claims, wherein the doping concentrations of said first and second FE layers (30, 32) are from $0.8 \cdot 10^{20}$ cm$^{-3}$ to $5 \cdot 10^{20}$ cm$^{-3}$, preferably of about $1 \cdot 10^{20}$ cm$^{-3}$, at room temperature.

5. Capacitive device according to any of the preceding claims, wherein said first and second FE layers (30, 32) are made of PZT, and said n-type FE layer (30) is doped with about 1% Nb and said p-type FE layer (32) is doped with about 1% Fe.

6. Method for manufacturing a capacitive device according to any preceding claim, comprising the steps:

   i) depositing, by epitaxial deposition, a first electrod (2) on a substrate (3),
   ii) depositing, by epitaxial deposition, one of the first, n-doped FE layer (30) or second, p-doped FE layer (32) on the conductive layer (2),
   iii) depositing, by epitaxial deposition, the other of the first, n-doped FE layer (30) or second, p-doped FE layer (32) on the layer deposited in step ii),
   iv) depositing, by epitaxial deposition, a second electrod (4) on the layer deposited in step iii).

7. Method according to claim 6, wherein, after step iii, at least a further pair of n-doped and p-doped layers (30, 32) are deposited on the layer deposited in step iii), such that any two consecutive FE layers have different, n-type or p-type dopings.

8. Method according to any of claims 6 to 7, wherein the substrate mentioned at step i) is in the form of a single-crystal layer having a pervoskite structure, preferably made of $SrTiO_3$ (STO) with (0,0,1) orientation.

9. Method according to any of claims 6 to 8, wherein the epitaxial deposition of the layers is made by pulsed laser deposition (PLD).

10. Use of a ferroelectric bi-layer forming a p-n homojunction wherein the two layers have substantially equal p-type and n-type doping concentrations in a capacitive device.

Fig. 1

Fig. 2a

Fig. 2b)

Europäisches
Patentamt

European
Patent Office

Office européen
des brevets

# EUROPEAN SEARCH REPORT

**Application Number**

EP 22 46 5566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 085272 A (MATSUSHITA ELECTRIC IND CO LTD) 30 March 2001 (2001-03-30) * abstract; claims 1, 2, 5-7 * * paragraphs [0012], [0023], [0024], [0043] * * the whole document * | 1-5 | INV. H01G4/06 H01G4/12 H01G4/20 H01G4/30 |
| X A | US 3 305 394 A (KAISER HAROLD D ET AL) 21 February 1967 (1967-02-21) * column 1; 2, lines 50-55; 6-15, 22-29, 33-41 * * column 3; 4; 6, lines 1-15, 60-66; 3-9; 10-17; claims 1, 2; figures 1-3 * * the whole document * | 1-3 4,5 | |
| X A | US 4 772 985 A (YASUMOTO TAKAAKI [JP] ET AL) 20 September 1988 (1988-09-20) * abstract; claims 1, 4-6, 9, 11; figure 2 * * column 1; 3; 4, lines 39-64; 30-55; 36-65 * * the whole document * | 1-3 4,5 | |

**TECHNICAL FIELDS SEARCHED (IPC)**

H01G
H01L
H10B
C04B

The present search report has been drawn up for all claims

| Place of search | Date of completion of the search | Examiner |
|---|---|---|
| Munich | 25 April 2023 | Dessaux, Christophe |

EPO FORM 1503 03.82 (P04C01)

Europäisches
Patentamt

European
Patent Office

Office européen
des brevets

Application Number

EP 22 46 5566

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-5**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-5

   A capacitive device comprising two electrodes separated by a dielectric medium characterized in that:
   - the dielectric medium consist of one or more pairs of ferroelectric (FE) layers,
   - a first n-type (FE) layer
   - a second type p-type (FE) layer
   wherein said first and second (FE) layers form a (FE) p-n homojunction and have substantially equal doping concentration.
   ---

2. claims: 6-10

   A method for manufacturing a capacitive device having one or more pairs of ferroelectric layers as a dielectric medium: comprising the steps of:
   i) depositing by epitaxial deposition a first electrode on a substrate,
   ii) depositing by epitaxial deposition one of the first n doped (FE) layer or second p-doped (FE) layer on the conductive layer,
   iii) depositing by epitaxial deposition the other of the first n doped (FE) layer or second p-doped (FE) layer on the layer deposited in step ii),
   iv) depositing by epitaxial deposition a second electrode on the layer deposited in step iii).
   ---

## ANNEX TO THE EUROPEAN SEARCH REPORT
## ON EUROPEAN PATENT APPLICATION NO.

EP 22 46 5566

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2023

| Patent document cited in search report | | Publication date | Patent family member(s) | | Publication date |
|---|---|---|---|---|---|
| JP 2001085272 | A | 30-03-2001 | NONE | | |
| US 3305394 | A | 21-02-1967 | GB 1051815 | A | 21-12-1966 |
| | | | JP S5234744 | B1 | 05-09-1977 |
| | | | US 3305394 | A | 21-02-1967 |
| US 4772985 | A | 20-09-1988 | DE 3732054 | A1 | 07-04-1988 |
| | | | US 4772985 | A | 20-09-1988 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *J Mater Sci,* 2016, vol. 51, 499-505
- **ATANU K. SAHA ; SUMEET K. GUPTA.** Negative capacitance effects in ferroelectric heterostructures: A theoretical perspective. *Journal of Applied Physics,* 2021, vol. 129, 080901

- **ASIF ISLAM KHAN.** Experimental evidence of ferroelectric negative capacitance in nanoscale heterostructures. *Appl. Phys. Lett.,* 2011, vol. 99, 113501
- **WEIWEI GAO.** Room temperature negative capacitance in a ferroelectric-dielectric superlatice heterostructure. *Nano Lett.,* 2014